(19) Europäisches Patentamt

European Patent Office

Office européen des brevets

(11) **EP 3 264 331 A1**

(12) **DEMANDE DE BREVET EUROPEEN**

(43) Date de publication:
**03.01.2018  Bulletin 2018/01**

(51) Int Cl.:
***G06K 9/00*** (2006.01)

(21) Numéro de dépôt: **17178861.5**

(22) Date de dépôt: **29.06.2017**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA MD**

(30) Priorité:  **30.06.2016  FR 1656252**

(71) Demandeur: **Safran Identity & Security
92130 Issy-les-Moulineaux (FR)**

(72) Inventeurs:
  • **ROUH, Alain
    92130 ISSY-LES-MOULINEAUX (FR)**
  • **LE GOUIL, Elise
    92130 ISSY-LES-MOULINEAUX (FR)**
  • **GACON, Pierre
    92130 ISSY-LES-MOULINEAUX (FR)**
  • **KRICHEN, Emine
    92130 ISSY-LES-MOULINEAUX (FR)**
  • **BRAUN, Jean-Noël
    92130 ISSY-LES-MOULINEAUX (FR)**

(74) Mandataire: **Lavialle, Bruno François Stéphane et
al
Cabinet Boettcher
16, rue Médéric
75017 Paris (FR)**

(54) **PROCEDE DE DETECTION DE FRAUDE D'UN SYSTEME DE RECONNAISSANCE D'IRIS**

(57)     Procédé de détection de tentative de fraude envers un système de reconnaissance d'iris d'oeil humain, comprenant :
- la génération d'une première image (3a) d'un iris (2) à l'aide de premiers moyens de capture d'image (3) en spectre de lumière visible ;
- la génération d'une seconde image (4a) dudit iris (2) à l'aide de seconds moyens de capture d'image (4) en spectre proche infrarouge.
    Le procédé comprend :
- la détermination d'au moins une caractéristique de la première image (3a) déterminée en fonction de caractéristiques optiques respectives de points d'une pluralité de points de cette première image ; et
- la détermination d'au moins une caractéristique de la seconde image (4a) déterminée en fonction d'intensités lumineuses respectives de points d'une pluralité de points de cette seconde image ; et
en fonction de ladite au moins une caractéristique de la première image ainsi déterminée et de ladite au moins une caractéristique de la seconde image ainsi déterminée, on génère un signal (S) représentatif d'une suspicion de détection de tentative de fraude.

Fig. 4

EP 3 264 331 A1

**Description**

La présente invention concerne le domaine des procédés de détection de tentative de fraude envers un système de reconnaissance d'iris d'oeil humain.

ARRIERE PLAN DE L'INVENTION

De manière générale un iris d'oeil humain est une zone colorée qui entoure la pupille et qui est entourée par la sclère. L'iris présente plusieurs zones de couleurs différentes. La couleur d'une zone donnée est fonction de la densité de mélanine dans cette zone donnée.

Plus la densité de mélanine dans la zone donnée est importante et plus cette zone apparait foncée lorsqu'observée dans le spectre de lumière visible.

La quantité de mélanine dans une zone donnée de l'iris est susceptible d'évoluer dans le temps en fonction de paramètres tels que l'exposition de l'individu à la lumière du soleil ou une maladie de pigmentation d'iris. Ceci rend l'information de couleur des zones de l'iris insuffisante pour garantir une reconnaissance / authentification / identification d'un iris donné d'un individu donné.

L'iris comporte un grand nombre de fibres musculaires permettant de dilater ou au contraire resserrer la pupille. La plupart de ces fibres, environ 6000 sont disposées en rayons, autour de la pupille.

Ces fibres sont plus ou moins serrées et plus ou moins enchevêtrées, et constituent une trame dont l'enchevêtrement est unique à chaque oeil.

Des systèmes de reconnaissance d'iris sont connus dans des applications d'authentification d'individus. Toutefois ces systèmes sont susceptibles d'être trompés par la présentation d'une image d'iris d'oeil humain ou d'un faux iris. Afin de limiter les risques de fraude envers le système de reconnaissance d'iris, il a été envisagé d'utiliser une image de cet iris dans le domaine du visible et une image de ce même iris dans le domaine des proches infrarouges.

C'est ainsi que le document FR2864290_A1, du même déposant, divulgue un procédé de détection biométrique dans lequel on génère :

- une première image d'un iris d'oeil humain observé à l'aide de premiers moyens de capture d'image sensibles dans un spectre de lumière visible; et
- une seconde image de cet iris observé à l'aide de seconds moyens de capture d'image sensibles dans un spectre infrarouge.

La première image en couleurs est utilisée pour détecter le bord extérieur de l'iris et faciliter la localisation d'une zone d'intérêt biométrique correspondante se trouvant dans la seconde image en spectre infrarouge pour y rechercher des caractéristiques biométriques, en l'occurrence des caractéristiques de texture. L'authentification se fait ici en recherchant des caractéristiques typiques de la trame ou de la texture de l'iris, dans la zone d'intérêt de la seconde image en infrarouge. Ce document FR2864290_A1 décrit aussi un type de tentative de fraude envers le système de reconnaissance d'iris d'oeil humain, qui se fait par présentation d'une image de l'iris en encre visible dans le spectre infrarouge. Comme ce type d'encre présente, dans le spectre visible, une couleur particulière distincte de la couleur des vrais iris, ce document FR2864290 propose un procédé de détection de tentative de fraude par analyse colorimétrique de la première image.

Pour améliorer la sécurité du système de reconnaissance d'iris, il est utile d'améliorer la détection de tentatives de fraude envers le système.

OBJET DE L'INVENTION

Un objet de la présente invention est de fournir un procédé permettant de détecter des tentatives de fraude envers un système de reconnaissance d'iris d'oeil humain.

RESUME DE L'INVENTION

A cette fin, il est proposé selon l'invention, un procédé de détection de tentative de fraude envers un système de reconnaissance d'iris d'oeil humain, le procédé comprenant :

- la génération d'une première image d'un iris d'oeil humain observé à l'aide de premiers moyens de capture d'image sensibles dans un spectre de lumière visible et sur un intervalle de fréquences couvrant au moins 50% du spectre de lumière visible, cette première image étant une image couleur large spectre ;
- la génération d'une seconde image dudit iris observé à l'aide de seconds moyens de capture d'image sensibles dans un spectre proche infrarouge.

Le procédé selon l'invention est essentiellement caractérisé en ce qu'il comprend :

- la détermination d'au moins une caractéristique de la première image déterminée en fonction de caractéristiques optiques respectives de points d'une pluralité de points de cette première image ; et
- la détermination d'au moins une caractéristique de la seconde image déterminée en fonction d'intensités lumineuses respectives de points d'une pluralité de points de cette seconde image ; et en ce que

en fonction de ladite au moins une caractéristique de la première image ainsi déterminée et de ladite au moins une caractéristique de la seconde image ainsi déterminée, on génère un signal représentatif d'une suspicion de détection de tentative de fraude.

Dans la présente description, le terme iris désigne toujours un iris d'oeil humain. Par spectre de lumière visible on entend une lumière de longueur d'onde comprise entre 380nm et 700nm et par spectre proche infrarouge on entend un spectre de lumière ayant une longueur d'onde comprise entre 700nm et 950nm.

Pour la compréhension de l'invention, la sensibilité des premiers moyens de capture d'image dans le spectre de lumière visible et sur un intervalle de fréquences couvrant au moins 50% du spectre de lumière visible signifie que ces premiers moyens de capture captent des fréquences lumineuses dans une plage s'étendant sur au moins 50% de la plage 380nm-700nm. Ainsi tout moyen de capture d'image sensible sur une largeur totale de bande de fréquence égale à au moins 50% de la largeur de bande 380nm-700nm est considéré comme un moyen de capture d'image large spectre. Par image couleur large spectre, on entend une image couleur présentant plusieurs couleurs, l'une de ces couleurs ayant une basse fréquence et une autre de ces couleurs ayant une haute fréquence, relativement à cette basse fréquence et l'écart entre ces haute et basse fréquences étant d'au moins 160nm (soit un intervalle fréquentiel d'au moins 50% de la largeur du spectre visible 380nm-700nm). Les caractéristiques optiques d'un point de la pluralité de points de la première image comportent l'intensité lumineuse de ce point et/ou la couleur de ce point de l'image couleur.

Le terme « iris d'oeil humain observé » à l'aide de moyens de capture d'image comprend à la fois une observation d'un vrai iris humain directement positionné face au moyen de capture d'image et une observation d'une reproduction d'un iris d'oeil humain, cette reproduction de l'iris étant positionnée faces aux moyens de capture d'image.

Le fait de générer un signal représentatif d'une suspicion de fraude élaboré en fonction d'une caractéristique de la première image et d'une caractéristique de la seconde image permet de prendre en compte des aspects particuliers de ces deux images pour pouvoir décider de la génération du signal représentatif de la suspicion de détection de tentative de fraude. On peut ainsi détecter des fraudes qui ne seraient normalement pas détectées en cherchant séparément un signe de fraude dans l'image en spectre visible et un autre signe de fraude dans l'image en spectre proche infrarouge.

Au contraire de cela, dans la présente invention, on prend en compte à la fois la caractéristique de la première image et la caractéristique de la seconde image pour générer le signal représentatif de la suspicion de fraude.

Des cas de fraudes supplémentaires peuvent ainsi être détectés.

Selon un mode de réalisation préférentiel du procédé selon l'invention, à l'aide de ladite au moins une caractéristique de la première image ainsi déterminée et de ladite au moins une caractéristique de la seconde image ainsi déterminée, on calcule un paramètre de similarité représentatif d'un degré de similarité entre les première et seconde images selon au moins un critère de ressemblance donné, ce paramètre de similarité variant entre des première et seconde valeurs en passant par une valeur seuil intermédiaire prédéterminée, la première valeur correspondant à un fort degré de ressemblance entre les première et seconde images et la seconde valeur correspondant à un faible degré de ressemblance entre ces première et seconde images, le signal représentatif d'une suspicion de détection de fraude étant émis pour signaler une suspicion de fraude lorsque ledit paramètre de similarité prend une valeur située entre ladite valeur seuil intermédiaire et ladite première valeur qui correspond à un fort degré de ressemblance selon ledit au moins un critère de ressemblance donné.

Le degré de ressemblance entre les première et seconde images est établi selon au moins un critère de ressemblance donné prédéterminé.

Ainsi, la première valeur correspondant à un fort degré de ressemblance entre les première et seconde images est établie en fonction de cet au moins un critère de ressemblance donné. De même, la seconde valeur correspondant à un faible degré de ressemblance entre ces première et seconde images est aussi établie selon ce même au moins un critère de ressemblance donné.

Grâce à ce mode préférentiel de réalisation du procédé selon l'invention, si les images ont un fort degré de ressemblance selon ledit au moins un critère donné, c'est-à-dire si le paramètre de similarité a une valeur située entre la première valeur et la valeur seuil intermédiaire prédéterminée, alors on détecte qu'il y a une forte probabilité pour que l'on ait affaire à une tentative de fraude. Dans ce cas, on génère le signal pour indiquer une suspicion de fraude.

Certaines caractéristiques d'iris d'un vrai oeil, comme des tâches de mélanine dans l'iris, apparaissent clairement dans une image réalisée à l'aide d'un capteur uniquement sensible en spectre de lumière visible, mais elles n'apparaissent pas dans une image réalisée à l'aide d'un capteur uniquement sensible en spectre proche infrarouge.

Inversement, certaines des caractéristiques d'iris du vrai oeil, comme la texture d'iris, ne sont visibles que dans la seconde image en spectre proche infrarouge et pas dans la première image en spectre visible. Ainsi, les iris sombres ont une information de texture qui est sous la mélanine et qui est apparente dans la seconde image en proche infrarouge mais pas dans la première image en spectre visible. Cette information de texture visible sur la seconde image est particulièrement riche et constitue une information biométrique.

La ressemblance entre les première et seconde images respectivement en spectre visible et en spectre proche infrarouge peut ainsi impliquer que l'on visualise dans l'une des deux images des caractéristiques visibles dans l'autre image alors que, dans le cas d' un vrai iris, on ne devrait pas les retrouver sur ces deux images.

Grâce au procédé selon l'invention, en prenant en compte au moins un critère de ressemblance donné, on peut déterminer un paramètre de similarité entre les images. Puis, si ce paramètre de similarité implique une similarité / ressemblance entre ces images, on a alors une forte suspicion de détection de tentative de fraude et on émet alors ledit signal représentatif d'une tentative de fraude.

A contrario, si, selon le critère de ressemblance choisi, le paramètre de similarité implique une faible ressemblance entre ces première et seconde images, il n'y a alors pas de raison objective pour établir une tentative de fraude. Dans ce cas, on attendra de détecter un indice de tentative de fraude avant de générer le signal représentatif d'une suspicion de détection de fraude.

Préférentiellement, ledit calcul du paramètre de similarité représentatif d'un degré de similarité entre les première et seconde images se fait par observation d'une première zone d'intérêt dans la première image et d'une seconde zone d'intérêt dans la seconde image, ces première et seconde zones d'intérêt des première et seconde images étant représentatives d'une même zone de l'iris observé.

D'autres exemples de critères de ressemblances utilisables pour mettre en oeuvre le procédé selon l'invention seront présentés ci-après.

Selon un mode de réalisation du procédé selon l'invention, ledit au moins un critère de ressemblance donné comprend la présence d'un objet visible dans une région donnée de la première image et dans une région donnée correspondante de la seconde image, le paramètre de similarité ayant une valeur calculée située entre ladite valeur seuil intermédiaire et ladite première valeur qui correspond à un fort degré de ressemblance en cas de présence dudit objet.

Le calcul du paramètre de similarité ou du critère de ressemblance entre image peut utiliser la méthode MSER, présentée dans la publication de J. Matas, O. Chum, M. Urban, and T. Pajdla, "Robust wide baseline stereo from maximally stable extremal regions." Proc. of British Machine Vision Conference, pages 384-396, 2002.Selon un mode de réalisation du procédé selon l'invention, ledit au moins un critère de ressemblance donné comprend un nombre de taches présentes dans la première image et également présentes dans la seconde image, le paramètre de similarité ayant une valeur calculée située entre ladite valeur seuil intermédiaire et ladite première valeur qui correspond à un fort degré de ressemblance si ce nombre de taches est supérieur ou égal à 1.

En d'autres termes, si au moins une tache, typiquement de mélanine, est détectée à la fois dans l'image en spectre de lumière visible (première image) et dans l'image en spectre proche infrarouge (seconde image), alors le paramètre calculé de ressemblance est tel que l'on considère une ressemblance suffisante entre ces première et seconde images, le signal informant d'une suspicion de fraude est alors généré.

La détection d'une ou plusieurs taches visibles sur l'image en spectre proche infrarouge et aussi visibles sur l'image en spectre lumière visible, augmente les chances que l'on ait affaire à une tentative de fraude.

En effet, une tache qui apparait sur la première image en lumière visible signale généralement une densité particulière de mélanine en plusieurs points adjacents de l'iris observé.

Or, la variation de densité de mélanine n'est normalement pas visible dans un spectre proche infrarouge, seule la texture de l'iris devant y être visible.

Si l'iris observé sur les première et seconde images est vrai, alors la ou les taches apparentes sur la première image en spectre de lumière visible doivent être invisibles sur la seconde image en spectre proche infrarouge.

A contrario, si l'objet observé sur les première et seconde images est une reproduction, par exemple issue d'une image d'un iris réalisée dans le spectre visible, un faux iris ou une image d'un iris, telle qu'une impression jet d'encre ou laser d'une photo d'iris, alors on pourra identifier une ou plusieurs taches apparentes à la fois sur la première image et sur la seconde image.

Cette ressemblance entre les deux images, suivant le critère de nombre de taches, sera considérée comme suffisante, forte ou importante ce qui laisse suspecter une tentative de fraude. Le paramètre de similarité calculé à partir de ces deux images aura alors une valeur calculée située entre ladite valeur seuil intermédiaire et ladite première valeur qui correspond à un fort degré de ressemblance.

Le signal représentatif d'une suspicion de détection de fraude est alors émis pour signaler une suspicion de fraude.

Aussi surprenant que cela puisse paraître, si en fonction du critère de ressemblance choisi on trouve que les première et seconde images sont fortement ressemblantes, alors on suspecte une tentative de fraude et on génère un signal indiquant cette suspicion.

Selon un autre mode de réalisation du procédé selon l'invention (éventuellement complémentaire du précédent mode où le critère de ressemblance est un nombre de taches), le critère de ressemblance peut être une distance statistique entre les première et seconde images.

Dans ce cas, ledit paramètre de similarité est obtenu à l'aide d'une valeur de distance statistique entre :

- une première série de données obtenue par mesure desdites caractéristiques optiques respectives de points de cette première image ; et
- une seconde série de données obtenue par mesure desdites intensités lumineuses respectives de points de la seconde image.

La distance statistique entre ces deux images est par exemple déterminée à l'aide d'une distance de type Chi2.

L'usage d'une distance statistique pour calculer le critère de ressemblance permet d'avoir une information de fond quantifiée précisément sur la similarité entre les première et seconde images et sur l'écart entre les textures de ces images.

Dans ce mode, le paramètre de similarité est calculé à l'aide d'une valeur de distance statistique.

Si le paramètre de similarité fonction de cette distance statistique entre les première et seconde images est supérieur à la valeur seuil prédéterminée, alors on sait qu'il y a une similarité entre ces images suffisante pour suspecter une tentative de fraude. Le signal de tentative de fraude peut alors être généré.

Dans un mode de réalisation particulier :

- d'une part la première série de données est obtenue par calcul à l'aide de caractéristiques mesurées de points de la première image, cette première série de données constituant un descripteur d'une texture apparente dans cette première image ; et
- d'autre part la seconde série de données est obtenue par calcul, à l'aide de caractéristiques mesurées de points de la seconde image, cette seconde série de données constituant un descripteur d'une texture apparente dans la seconde image.

A titre d'exemple un descripteur de texture, peut comprendre des filtres de Gabor telles que ceux décrits dans le brevet de John Daugman US5291560.

D'autres types de descripteurs de textures peuvent être utilisés pour la mise en oeuvre du procédé selon l'invention, le but étant de fournir des première et seconde séries de données normalisées permettant une comparaison normée des images et facilitant ainsi le calcul du paramètre de similarité entre les première et seconde images et une détection de fraude ayant une fiabilité déterminée par normalisation des données traitées /utilisées. BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:

- la figure 1 présente une vue schématique d'un système de reconnaissance d'iris selon l'invention ;
- la figure 2a présente la génération de première et seconde images d'un vrai oeil comportant des taches de mélanine, la première image étant vue dans un spectre lumière visible et la seconde dans un spectre proche infrarouge ;
- la figure 2b présente aussi des première et secondes images, mais ici on observe une reproduction d'oeil / un faux oeil ayant des taches pouvant être des taches de mélanine, on constate la présence de ces taches sur les première et seconde images ce qui est un indice de tentative de fraude ;
- la figure 3 présente un mode de réalisation du procédé selon l'invention dans lequel le critère de ressemblance utilisé pour détecter une tentative de fraude est une distance statistique entre des données générées à partir de caractéristiques de points des première et seconde images ;
- la figure 4 illustre le procédé selon l'invention lors de son application à la reconnaissance d'un vrai iris, avec ici une faible ressemblance entre les première et seconde images selon le critère de distance statistique ;
- la figure 5 illustre les mêmes éléments qu'à la figure 4, mais ici l'iris observé est un faux / une reproduction et l'on trouve une forte ressemblance entre les première et seconde images, ce qui implique une forte suspicion de fraude et l'émission d'un signal représentatif d'une suspicion de détection de tentative de fraude.

DESCRIPTION DETAILLEE DE L'INVENTION

L'invention concerne un procédé de détection de tentative de fraude envers un système de reconnaissance d'iris d'oeil humain.

L'invention concerne aussi un système de reconnaissance d'iris d'oeil humain mettant en oeuvre le procédé selon l'invention, ce système pouvant appartenir à un système de contrôle aux frontières ou un système de contrôle d'accès de bâtiment.

L'invention porte aussi sur un terminal fixe, c'est-à-dire une borne de contrôle aux frontières ou une borne de contrôle d'accès de bâtiment, ou sur un terminal mobile, c'est dire un appareil portable (comme un smartphone, ou une tablette tactile) permettant le traitement et l'échange de données, et intégrant le système de reconnaissance selon l'invention.

Un système 1 de reconnaissance d'iris 2 selon l'invention comporte au moins :

- des premiers moyens de capture d'image 3 sensibles dans un spectre de lumière visible ;
- des seconds moyens de capture d'image 4 sensibles dans un spectre proche infrarouge ;
- un dispositif de calcul 5 relié auxdits premier et second moyens de capture d'image ;
- éventuellement des premiers moyens de mémorisation 6 pour mémoriser des caractéristiques biométriques préenregistrées d'au moins un iris d'un individu connu, ces éventuels premiers moyens de mémorisation étant reliée au dispositif de calcul ;
- des seconds moyens de mémorisation 7 pour y mémoriser au moins une première image 3a d'un iris d'oeil humain observé à l'aide de premiers moyens de capture d'image 3 et au moins une seconde image 4a dudit iris observé à l'aide de seconds moyens de capture d'image 4.

Lorsqu'ils existent ces premiers moyens de mémorisation 6 peuvent être intégrés dans un terminal du système ou être intégrés dans un serveur du système, à distance du terminal, ce terminal pouvant être mobile ou fixe.

Le dispositif de calcul 5 est agencé pour exécuter le procédé de détection de fraude selon l'invention.

A cet effet, le dispositif de calcul 5 est agencé pour exécuter une opération de reconnaissance consistant à reconnaitre dans au moins une image générée par les premiers et/ou seconds moyens de capture d'image 3, 4, des caractéristiques biométriques de l'individu connu si les caractéristiques biométriques d'iris de cet individu connu sont préenregistrées dans les premiers moyens de mémorisation 6 et si elles sont également apparentes dans cette au moins une image. Cette au moins une image est par exemple la première ou la seconde image 3a, 4a ou une autre image sélectionnée dans une série d'images contenant au moins une de ces première ou seconde images 3a, 4a.

Le dispositif de calcul 5 est également adapté à générer, en fonction du résultat de l'exécution de cette opération de reconnaissance, un signal d'authentification, ou d'identification, indiquant s'il y a eu ou non reconnaissance des caractéristiques biométriques de l'iris de l'individu connu.

Suivant le procédé selon l'invention :

- à l'aide des premiers moyens de capture 3, on observe un iris et on génère une première image 3a de cet iris 2 dans le spectre de lumière visible ;
- à l'aide des second moyens de capture 4 on observe cet iris et on génère une seconde image 4a de cet iris 2 dans le spectre proche infrarouge.

Ces premiers et seconds moyens de capture peuvent appartenir à un même capteur ou à plusieurs capteurs séparés.

Les images 3a, 4a sont mémorisées à l'aide des seconds moyens de mémorisation 7 qui comportent au moins une RAM et si nécessaire une mémoire permanente locale implanté dans le terminal et/ou une mémoire permanente distante implantée sur un serveur distant du terminal et appartenant au système.

Comme indiqué précédemment, la première image 3a est une image en couleur, c'est-à-dire composée de plusieurs couleurs en large spectre, c'est-à-dire une image ayant des couleurs réparties dans un spectre d'au moins 50% de la largeur de la plage de fréquences 380nm-700nm.

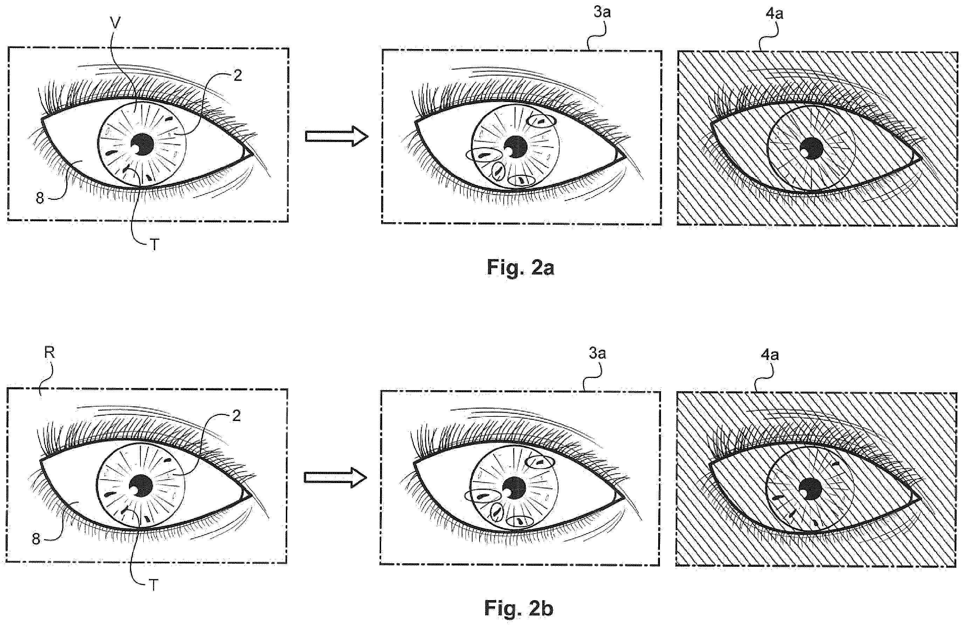

Comme illustré sur les figures 2a et 2b, l'iris 2 observé présente des zones à plus ou moins fortes densités de mélanine. Certaines de ces zones forment des taches T, une tache T correspondant à une partie de l'iris 2 qui présente une forte densité localisée de mélanine avec un important différentiel de concentration de mélanine vis-à-vis de zones voisines de la tache T.

L'iris observé à la figure 2a est un vrai iris humain V alors que l'iris observé à la figure 2b est une reproduction R d'un vrai iris humain. Cette reproduction R est utilisée pour tenter de tromper le système de reconnaissance selon l'invention et tenter de réaliser une fraude. Cette reproduction R est une fraude telle qu'une photographie ou une image imprimée.

Qu'il s'agisse du vrai iris V illustré à la figure 2a ou de la reproduction d'iris R illustrée à la figure 2b, on constate que les taches T apparaissent clairement sur chaque première image 3a réalisée en spectre visible, à partir d'un vrai iris ou à partir d'une image couleur d'un iris.

On constate sur la seconde image en proche infrarouge 4a de la figure 2a (image en proche infrarouge par observation d'un vrai iris V) que des variations de densité de mélanine, telles que les taches T, observables sur la première image 3a, ne sont pas observables sur l'image 4a.

A contrario, sur la seconde image en proche infrarouge 4a de la figure 2b (image en proche infrarouge par observation d'une reproduction R d'iris), on constate que des variations de densité de mélanine, telles que les taches T, observables sur la première image 3a, restent au moins partiellement observables sur l'image 4a.

Lorsque les première et seconde images 3a, 4a résultent de l'observation d'un vrai iris V, on a une ressemblance entre images 3a, 4a plus faible que lorsque ces images résultent de l'observation d'une reproduction R d'un iris 2.

Ce phénomène est essentiellement lié à une propriété de la mélanine qui est moins visible lorsqu'observée en spectre proche infrarouge.

Comme cela sera expliqué ci-après, le système de reconnaissance d'iris mettant en oeuvre le procédé selon l'invention est agencé pour, en fonction d'un critère de ressemblance donné, déterminer une similarité entre les première et secondes images 3a, 4a, et pour conditionner la génération du signal S représentatif de la suspicion de fraude en fonction de la valeur prise par un paramètre de similarité Param représentatif d'un degré de similarité entre ces images 3a, 4a.

A cette fin, le dispositif de calcul 5 du système de reconnaissance d'iris :

- détermine au moins une caractéristique de la première image 3a, cette au moins une caractéristique étant déterminée en fonction de caractéristiques optiques respectives de points d'une pluralité de points de la première image ; et
- détermine au moins une caractéristique de la seconde image 4a, cette dernière au moins une caractéristique étant déterminée en fonction d'intensités lumineuses respectives de points d'une pluralité de points de cette seconde image.

En fonction de ladite au moins une caractéristique de la première image 3a et de ladite au moins une caractéristique de la seconde image 4a, le dispositif de calcul 5, génère ou non un signal S représentatif d'une suspicion de détection de tentative de fraude.

Le fait d'utiliser à la fois des caractéristiques de la première image et des caractéristiques de la seconde image pour décider de la génération du signal S représentatif d'une suspicion de détection de tentative de fraude permet de corréler ces caractéristiques des images pour augmenter la gamme de fraudes détectable.

Par exemple dans le cas d'une fraude réalisée par présentation d'une image d'iris en infrarouge, les première et seconde images 3a et 4a générées sont alors ressemblantes avec une absence de mélanine dans ces deux images. Cette similarité entre ces deux images 3a, 4a permet d'identifier la tentative de fraude.

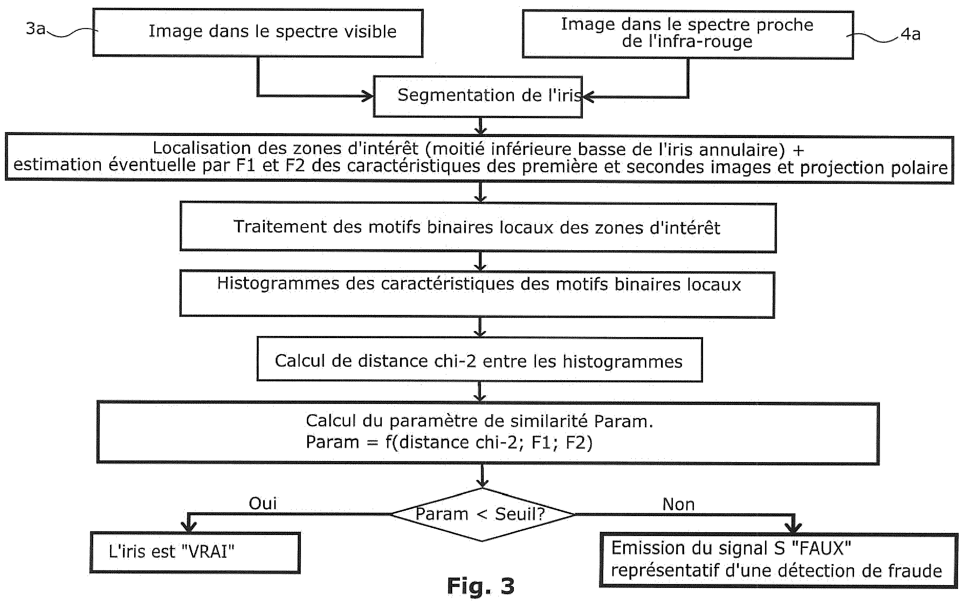

Plus particulièrement, comme cela sera expliqué en référence aux figures 3, 4 et 5, à l'aide de ladite au moins une caractéristique de la première image 3a et de ladite au moins une caractéristique de la seconde image 4a, on calcule un paramètre de similarité Param représentatif d'un degré de similarité entre les première et seconde images selon au moins un critère de ressemblance donné.

Ce paramètre de similarité varie entre des première et seconde valeurs en passant par une valeur seuil intermédiaire prédéterminée. Dans un mode de réalisation préférentiel présenté ci-après, un ou plusieurs facteurs de corrections F1, F2 sont calculés et utilisés pour définir le paramètre de similarité Param. Ce paramètre de similarité Param est rendu plus robuste ce qui augmente d'autant la fiabilité du procédé de détection de fraude selon l'invention.

En effet, ces facteurs de corrections F1, F2 permettent une normalisation des données utilisées pour calculer le paramètre de similarité Param. L'usage d'une valeur seuil intermédiaire prédéterminée est dès lors utile pour régler le niveau de sensibilité / similarité requis pour déclencher ou non l'émission du signal S.

Le calcul du paramètre de similarité Param permet d'avoir une échelle objective d'estimation de la similarité entre les images selon le ou les critères de ressemblance donnés.

La première valeur correspond à un fort degré de ressemblance entre les première et seconde images 3a, 4a alors que la seconde valeur correspond à un faible degré de ressemblance entre ces première et seconde images 3a, 4a.

Le signal S représentatif d'une suspicion de détection de fraude est émis pour signaler une suspicion de fraude lorsque ledit paramètre de similarité Param prend une valeur située entre la valeur seuil intermédiaire et la première valeur qui correspond à un fort degré de ressemblance selon ledit au moins un critère de ressemblance donné.

En fonction de la valeur du seuil intermédiaire choisie, on adapte le mode de fonctionnement du procédé de détection de fraude entre :

- une situation où il y aurait une forte probabilité de génération de fausses alarmes impliquant un travail complémentaire d'analyse de ces alarmes pour distinguer les fausses alarmes des vraies alarmes ; et

- une situation où il y aurait une faible probabilité de génération de fausses alarmes impliquant moins de travail complémentaire d'analyse mais augmentant la probabilité de non détection d'une fraude.

Ainsi, le choix de la valeur seuil dépendra du type d'application auquel est destiné le procédé selon l'invention.

Bien qu'il soit possible de choisir la valeur seuil intermédiaire parmi plusieurs valeurs seuil possibles en fonction de caractéristiques de l'iris observé, ce mode n'est pas préférentiel car on préfère normaliser les données permettant de calculer le paramètre de similarité Param. Préférentiellement, les caractéristiques optiques de points de la pluralité de points de cette première image comprennent les intensités lumineuses respectives de points de cette pluralité de points.

Ce mode est avantageux car il permet d'avoir un critère de comparaison basé sur une même nature de caractéristique optique, c'est-à-dire les intensités lumineuses de points d'images 3a, 4a. Ceci facilite le calcul du paramètre de similarité Param.

Selon un mode de réalisation alternatif, les caractéristiques optiques de points de la pluralité de points de cette première image 3a comprennent les couleurs respectives de points de cette pluralité de points.

Grâce aux moyens de capture d'image 3 sensibles dans le spectre visible, on génère une première image 3a qui est en couleur et dont chacun des points est au moins caractérisé par une couleur propre et par une intensité lumineuse propre qui constituent des caractéristiques optiques de ce point.

Dans le cas où ladite au moins une caractéristique de la première image est une tache T particulière sur l'image 3a, on peut repérer cette tache T en utilisant les couleurs respectives de points de l'image. Par exemple, on peut définir la tâche en recherchant dans l'image des points adjacents qui ont, à un écart prédéterminé de couleur près, une couleur commune distincte de couleurs d'autres points de l'image adjacents aux points de la tache T.

Dans ce mode, la tache est identifiée par la variation des couleurs des points dans la première image 3a.

Il est également possible que cette tache soit identifiée par analyse combinée de caractéristiques de variation de couleur et de caractéristiques de variation d'intensité lumineuse entre des points de cette première image 3a. Selon ce mode de réalisation, lesdites caractéristiques optiques de points de la pluralité de points de la première image comprennent à la fois les intensités lumineuses et les couleurs respectives de points de cette même pluralité de points de la première image.

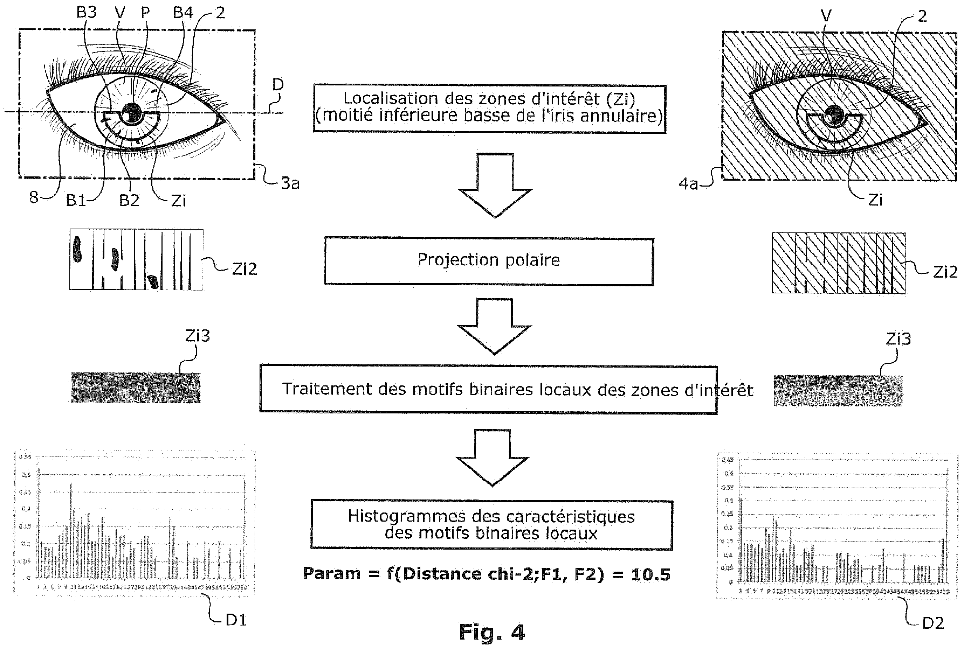

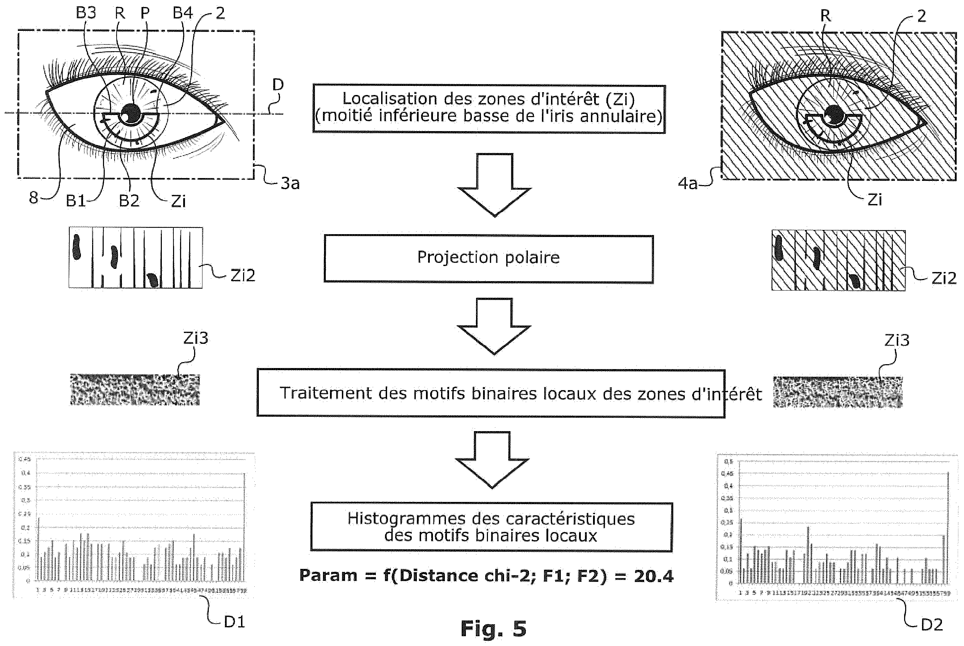

Selon un mode de réalisation particulier de l'invention, illustré aux figures 4 et 5, ledit paramètre de similarité Param est fonction d'une valeur de distance statistique entre :

- une première série de données D1 obtenue par mesure desdites caractéristiques optiques respectives de points de cette première image 3a (en l'occurrence il s'agit ici des intensités lumineuses respectives des points de la pluralité de points de la première image 3a) ; et
- une seconde série de données D2 obtenue par mesure desdites intensités lumineuses respectives de points de la seconde image 4a.

La figure 4 illustre un exemple de traitement réalisée conformément à un mode de réalisation particulier du procédé selon l'invention et à partir de l'observation d'un vrai iris à l'aides des premiers et seconds moyens optiques 3, 4.

La figure 5 illustre aussi un exemple de traitement réalisée conformément audit mode de réalisation particulier du procédé selon l'invention mais à partir de l'observation d'une reproduction d'un iris R via les premiers et seconds moyens optiques 3, 4.

Dans les deux cas des figures 4 et 5, une fois les première et seconde images 3a, 4a obtenues, une première étape consiste à localiser des zones d'intérêt Zi dans ces images, ces zones d'intérêt Zi correspondant à une même région observée de l'iris observé.

Pour cela, le procédé selon l'invention comporte :

- une étape de localisation d'une première zone d'intérêt Zi dans la première image 3a, les points de ladite pluralité de points de la première image 3a étant exclusivement contenus dans cette première zone d'intérêt Zi ; et
- une étape de localisation d'une seconde zone d'intérêt Zi dans la seconde image 4a, les points de ladite pluralité de points de la seconde image 4a étant exclusivement contenus dans cette seconde zone d'intérêt Zi.

Ces première et seconde zones d'intérêt Zi correspondent à une partie inférieure de l'iris 2 observé.

On préfère que les pluralités de points à étudier soient situées/ correspondent à la partie inférieure de l'iris observé car il s'agit d'une zone riche en motifs et moins susceptible d'être occultée par une paupière ou par des cils.

La définition des zones d'intérêt Zi peut se faire à l'aide d'une méthode de définition comprenant :

- la définition d'une bordure interne B1 de la zone d'intérêt par contraste de luminosité entre la pupille qui est foncée et l'iris qui est plus clair lorsqu'observé dans la première image 3a ;

- la définition d'une bordure externe B2 de la zone d'intérêt par contraste de couleurs dans la première image, à l'endroit d'une limite externe de la pupille et de la sclère 8 qui forme le blanc de l'oeil dans la partie inférieure de l'oeil ; et
- la définition de première et seconde bordures supérieures B3, B4 de la zone d'intérêt, ces deux bordures supérieures B3, B4 étant formées par des segments d'une droite D préférentiellement horizontale dans l'image et s'étendant éventuellement perpendiculairement par rapport à un rayon d'iris 2 passant par le centre de la pupille P.

La méthode de définition des zones d'intérêt Zi comporte la définition de quatre points d'intersections entre cette droite D et les bordures interne B1 et externe B2 qui sont chacune en forme d'arc. Parmi ces quatre points d'intersections, deux points sont situés à gauche du rayon d'iris et deux points sont situés à droite de ce rayon d'iris.

La première bordure supérieure B3 correspond au segment de droite D s'étendant entre les deux points à gauche du rayon d'iris et la seconde de bordure supérieure B4 correspond au segment s'étendant entre les deux points à droite du rayon d'iris.

On forme ainsi un périmètre fermé dans lequel se trouve la zone d'intérêt Zi.

En résumé, ce périmètre fermé est composé successivement :

- de la première bordure supérieure B3 (en forme de segment de droite) ;
- de la bordure interne B1 qui est en forme d'arc situé entre la pupille P et l'iris 2, cet arc ayant pour centre le centre de la pupille P ;
- de la seconde bordure supérieure B4 (segment de droite) ; et
- de la bordure externe B2 qui est en forme d'arc situé entre l'iris et la sclère 8, cet arc ayant aussi pour centre le centre de la pupille P.

Pour permettre l'obtention des première et seconde séries de données caractérisant respectivement les première et seconde images 3a, 4a, on peut réaliser une projection polaire de chacune des zones d'intérêt des première et seconde images. Cette projection polaire permet une normalisation des données pour qu'elles soient moins sensibles à la dilatation pupillaire et la taille absolue, ceci facilitant comparaison entre les images. A titre d'exemple, une projection polaire est décrite dans le document brevet US5291560.

Par cette projection polaire, chaque zone d'intérêt en forme d'arc est transformée en une zone d'intérêt projetée de forme sensiblement rectangulaire Zi2. On obtient donc une zone d'intérêt projetée issue d'une observation d'une portion inférieure d'iris dans le spectre visible et une zone d'intérêt projetée issue d'une observation de cette même portion inférieure de l'iris dans le spectre proche infrarouge.

Puis on traite chaque zone d'intérêt projetée Zi2 par traitement des motifs binaires locaux (traitement connu sous le terme LBP pour Local Binary Patterns) présents dans cette zone d'intérêt Zi2 et on obtient une représentation Zi3 de la zone d'intérêt sous une forme numérique.

En résumé, la première série de données D1 utilisée pour calculer la distance statistique est obtenue par calcul, pour chaque point donné de la pluralité de points de la première image 3a, d'un écart moyen d'intensité lumineuse entre ce point donné et des points de cette même pluralité de points qui lui sont adjacents / voisins.

Les données de cette première série de données D1 sont le nombre d'occurrences constaté pour chaque écart moyen ainsi calculé.

La seconde série de données D2 est obtenue par calcul, pour chaque point donné de la pluralité de points de la seconde image 4a, d'un écart moyen d'intensité lumineuse entre ce point donné et des points de cette même pluralité de points qui lui sont adjacents. Les données de cette seconde série de données D2 sont le nombre d'occurrences constaté pour chaque écart moyen ainsi calculé.

Ces données des première et seconde séries de données D1, D2 sont représentées sous formes d'histogrammes aux figures 4 et 5 avec en ordonné le nombre d'occurrence d'un écart moyen donné et en abscisse la valeur de l'écart moyen donné, c'est-à-dire la valeur du code du motif binaire.

En d'autres termes, il s'agit :

- d'une part de déterminer la première série de données D1 par détermination de motifs binaires locaux LBP dans la pluralité de points de la première image 3a ; et
- d'autre part de déterminer la seconde série de données D2 par détermination de motifs binaires locaux LBP dans la pluralité de points de la seconde image 4a.

Pour chaque pluralité de points d'une image donnée 3a, 4a, ces motifs binaires locaux LBP sont déterminés, par calculs d'écarts de luminosités entre des points adjacents entre eux dans cette pluralité de points de cette image donnée 3a, 4a.

Enfin, ayant défini ces première et seconde séries de données D1, D2, on calcule, une valeur de distance statistique entre ces première et seconde séries de données D1, D2. Cette valeur de distance statistique peut constituer ledit paramètre de similarité entre les première et seconde images 3a, 4a ou préférentiellement elle peut être utilisée pour définir ce paramètre de similarité entre ces images 3a, 4a avec d'autres facteurs de correction.

Préférentiellement, pour calculer le paramètre de similarité Param entre les première et seconde images 3a, 4a, on utilise un premier facteur correctif F1 déterminé en fonction de couleurs de points de cette première image 3a. La couleur de points de la première image 3a est un critère permettant d'estimer la densité de mélanine de points de l'iris représenté sur la première image 3a.

Ainsi, ce premier facteur correctif F1 prend en compte, au moins indirectement, la densité de mélanine estimée dans cet iris.

Ce premier facteur correctif F1 peut être déterminé en suivant une règle donnée. Par exemple, selon cette règle le premier facteur correctif F1 prend une première valeur pour un iris majoritairement bleu, une seconde valeur pour un iris majoritairement gris, une troisième valeur pour un iris majoritairement marron et une quatrième valeur pour un iris majoritairement noir. La première valeur est inférieure à la seconde valeur, la seconde valeur est inférieure à la troisième valeur et la troisième valeur est inférieure à la quatrième valeur.

Ainsi pour un iris majoritairement bleu (la couleur majoritaire dans la zone d'intérêt de l'iris est la couleur qui est prépondérante dans cette zone d'intérêt) le premier facteur F1 présentera une faible valeur, dite première valeur. A contrario, pour un iris majoritairement noir, le premier facteur F1 prendra une forte valeur dite quatrième valeur.

En d'autres termes :

- pour un iris clair, avec majoritairement peu de mélanine, on aura un faible facteur de correction F1 pour avoir une faible correction des données utilisées pour calculer le paramètre de similarité entre les première et seconde images ; et

- pour un iris sombre, avec majoritairement beaucoup de mélanine, on aura un fort facteur de correction F1.

Préférentiellement, pour calculer ledit paramètre de similarité entre les première et seconde images, on utilise un second facteur correctif F2 déterminé en fonction d'un niveau d'entropie de la première image 3a et/ou en fonction d'un niveau d'entropie de la seconde image 4a.

Plus il y a d'informations différentes dans une image donnée et plus son entropie est importante, plus cette image est riche en données et plus elle est intéressante en termes de qualité d'image.

Ce second facteur correctif F2 est calculé en fonction du niveau d'entropie dans l'une au moins des première et seconde images ou des niveaux d'entropies constatés dans ces deux images.

Plus l'entropie des images est faible et plus les images se ressemblent donc plus la similarité augmente avec une probabilité de fausse alarme pour un seuil donné qui augmente.

En d'autres termes, plus le niveau d'entropie dans une image est faible et plus l'image est pauvre et plus le second facteur correctif F2 choisi aura une valeur faible. Ainsi plus l'image observée est pauvre en entropie / texture et plus la valeur du paramètre de similarité est diminuée par le second facteur F2.

Plus le niveau d'entropie dans une image est important et plus l'image est riche en texture. Dans ce cas ce second facteur correctif F2 est choisi pour avoir une valeur forte. Ainsi plus l'image observée est riche en entropie / texture et plus la valeur du paramètre de similarité est maximisée par le second facteur F2.

En d'autres termes, pour une image présentant une forte densité d'information de texture, on obtient un fort niveau d'entropie. A contrario, si l'image est floue ou saturée ou si l'on a une panne matérielle de capteur permettant de générer cette image, on obtient alors pas ou peu d'information de texture sur l'image. On a alors de fortes chances pour que le paramètre d'écart entre les première et seconde images ne soit pas pertinent pour pouvoir décider sur la question de la présence ou pas d'une tentative de fraude. On cherche alors à réduire la valeur du paramètre de similarité pour qu'il passe sous le seuil prédéterminé et pour éviter la génération du signal S indiquant qu'a priori il y a une fraude. Une analyse plus poussée pourra être effectuée pour savoir si l'on a affaire à une réelle tentative de fraude ou à un problème technique induisant une ou des images de faible qualité.

Le calcul d'entropie d'une image peut se faire par observation de toute l'image ou préférentiellement par observation de la seule zone d'intérêt de cette image.

Ce calcul d'entropie peut utiliser la recherche dans l'image ou la zone d'intérêt $Z_i$ de l'image, d'au moins un objet présentant une densité spectrale d'énergie calculée sur tout ou partie du spectre d'intensité d'une bande de fréquence donnée observable dans l'image. Cette densité spectrale peut être calculée à l'aide d'une intensité moyenne de réponse dans un filtre fréquentiel donné appliqué à l'image, ce filtre fréquentiel définissant ladite bande de fréquence donnée observable dans l'image.

En résumé, le paramètre de similarité Param peut être exprimé par la formule :

```
Param= f(distance statistique Chi-2 ; F1 ; F2) ;
```

ou plus spécifiquement par la formule :

Param=F1*F2/(distance statistique Chi-2). Dans l'exemple de la figure 4 où l'iris observé est un vrai iris, le paramètre de similarité Param calculé à l'aide de la distance statistique Chi-2 entre ces images 3a, 4a / séries de données D1, D2 et des facteurs de correction F1, F2 prend une valeur de 10.5 .

Dans l'exemple de la figure 5 où l'objet observé est une reproduction R d'un iris, on constate que le paramètre de similarité Param calculé à l'aide de la distance statistique Chi-2 entre ces images 3a, 4a / séries de données D1, D2 et des facteurs de correction F1, F2 prend une valeur de 20.4.

Ainsi, on sait que les images 3a, 4a de la reproduction R ont un plus fort degré de similarité que les images 3a, 4a réalisées par observation d'un vrai iris.

Si, comme sur la figure 4, le paramètre de similarité Param calculé à l'aide de la distance statistique calculée est de 10.5, alors ce paramètre de similarité est inférieur à la valeur de seuil préalablement choisie. On sait alors que, a priori, les images 3a, 4a résultent de l'observation d'un vrai iris.

En cas d'observation d'un iris vrai V, on peut décider de générer un signal S représentatif d'absence de détection de tentative de fraude.

A contrario, si, comme sur la figure 5, le paramètre de similarité Param (20.4) calculé à l'aide de la distance statistique est supérieur à la valeur de seuil choisie, on sait alors que, a priori, les images 3a, 4a résultent de l'observation d'une reproduction R d'iris ou que les images ne permettent pas une évaluation correcte du risque de fraude.

En cas d'observation d'une reproduction R, on peut générer un signal S représentatif d'une suspicion de détection de tentative de fraude.

Le logigramme de la figure 3 résume le procédé selon l'invention avec dans un premier temps la génération des première et seconde images 3a, 4a d'un iris d'oeil humain en l'observant à l'aide des premiers et seconds moyens de capture 3, 4. Dans un second temps, on segmente l'iris représenté sur ces images en plusieurs zones dont au moins une zone d'intérêt Zi de l'iris visible sur ces deux images et correspondant à une même zone de l'iris observé. A l'issue de cette opération, on localise la zone d'intérêt Zi et on réalise une projection polaire de la zone d'intérêt de la première image 3a et une projection polaire de la zone d'intérêt de la seconde image 4a. Pour ces projections polaires, le centre de projection est le centre d'iris. On traite alors chacune de ces zones d'intérêt transformées par projections polaires suivant un traitement des motifs binaires locaux respectivement visibles sur ces zones d'intérêt transformées.

Puis, comme illustré sur les figures 4 et 5, on répartit les données observées sous forme d'histogrammes d'occurrence de chaque donnée pour former deux séries de données D1, D2.

Enfin on calcule une distance statistique Chi-2 entre ces histogrammes / séries de données D1, D2. On corrige cette valeur de distance statistique Chi-2 à l'aide des premier et second facteurs de correction F1 et F2 ce qui permet d'obtenir un paramètre de similarité Param représentatif de la similarité entre ces images.

Si ce paramètre Param est inférieur au seuil prédéterminé, alors on considère que les première et seconde images 3a, 4a ont un faible degré de similarité ce qui implique qu'elles ont été réalisées par observation directe d'un vrai iris. Le signal peut alors prendre une valeur « VRAI ». Si ce paramètre Param est supérieur au seuil prédéterminé, alors on considère que les images ont une forte similarité ce qui implique que les première et seconde images ont été réalisées par observation d'une reproduction R d'un iris. Le signal S peut prendre une valeur « FAUX » signalant la détection d'une tentative de fraude.

Dans un mode particulier, en cas d'absence d'émission du signal représentatif d'une détection de fraude et tant que ledit paramètre de similarité Param a une valeur située entre ladite valeur seuil intermédiaire et ladite seconde valeur qui correspond à un faible degré de ressemblance selon ledit au moins un critère de ressemblance donné, un signal d'absence de suspicion de détection de fraude est alors émis pour signaler une absence de suspicion de fraude.

En d'autres termes, si les première et seconde images ont un faible degré de ressemblance selon ledit au moins un critère de ressemblance donné, c'est-à-dire si le paramètre de similarité Param a une valeur située entre la seconde valeur et la valeur seuil intermédiaire prédéterminée, alors on détecte qu'il y a une faible probabilité pour que l'on ait affaire à une tentative de fraude.

Dans ce cas, et uniquement en l'absence d'émission du signal représentatif d'une détection de fraude S émis sur la base de ces mêmes première et seconde images, on génère un signal d'absence de suspicion de détection de fraude.

Dans le cas où un signal représentatif d'une détection de fraude aurait été émis sur la base des première et seconde images, aucun signal d'absence de suspicion de détection de fraude n'est émis.

En fonction de la détection ou pas d'une tentative de fraude on peut déclencher différentes actions. Par exemple, en cas de génération du signal représentatif d'une suspicion de détection d'une tentative de fraude, on peut :

- interdire la mise en oeuvre d'opérations d'authentification ou d'identification de l'individu dont l'iris est représenté sur les première et seconde images ; ou

- commander le déclenchement d'un temps d'attente d'une durée prédéterminée avant d'autoriser une nouvelle tentative de reconnaissance d'iris ; ou
- commander la révocation dans une base de données d'identités, d'une identité d'une personne dont l'iris a été utilisé lors de cette tentative de fraude ; ou
- commander le déclenchement d'une alarme à l'aide de moyens d'alarme du système.

Nous allons maintenant décrire deux modes de réalisations possibles des premiers et seconds moyens de capture d'image 3, 4.

Dans un premier mode, les premiers moyens de capture 3 d'image comportent des cellules d'un premier type sensibles uniquement dans le spectre de lumière visible et les seconds moyens de capture 4 comportent des cellules d'un second type sensibles uniquement dans le spectre proche infrarouge, ces cellules des premier et second types appartenant à un même capteur électronique d'images. Ici, les cellules des premier et second types sont intercalées entre elles et assemblées sur un même support du capteur électronique d'image, par exemple une plaque du capteur.

Ceci permet l'usage d'un seul et même capteur électronique pour générer les deux images depuis un point de vue commun à ces deux images. Grâce à ce mode de réalisation, il n'est pas nécessaire de réaliser un recalage géométrique de ces deux images pour simuler une prise de vue de ces images depuis un seul et même point de vue.

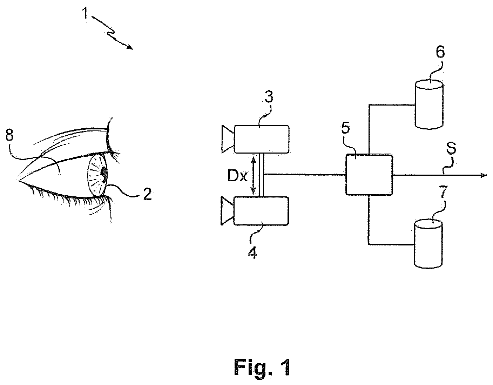

Dans un second mode (figure 1) alternatif au précédent, les premiers moyens de capture d'image 3 comportent des cellules d'un premier type sensibles uniquement dans le spectre de lumière visible et les seconds moyens de capture 4 comportent des cellules d'un second type sensibles uniquement dans le spectre proche infrarouge. Les cellules du premier type appartiennent à un même premier capteur électronique d'images et les cellules du second type appartiennent à un même second capteur électronique d'images. Ces capteurs des premier et second types sont espacés l'un de l'autre d'une distance prédéterminée Dx.

Dans ce second mode, le procédé peut comporter une opération de recalage des première et seconde images. Cette opération de recalage peut se faire de différentes manières, par calibration des caméras ou sans calibration des caméras et par traitement d'image.

Une méthode peut consister à segmenter l'iris dans chaque image, puis transformer ces images en log-polaire et comparer les données d'iris présentées sur les images, ce qui revient à placer les iris de ces images dans un repère commun.

Une autre méthode peut être d'utiliser des descripteurs locaux permettant une mise en correspondance entre les images puis un calage de ces images.

Plusieurs documents décrivent des méthodes de recalage d'images comme la méthode SIFT pour « scale invariant feature transform » (« transformation de caractéristiques visuelles invariante à l'échelle ») ou la méthode de la publication « Lowe D. G., 1999, Object recognition from local scale invariant features, Proceedings of the International Conference on Computer Vision, vol. 2, p. 1150-1157»). Une méthode de calibration est aussi connue du document brevet WO2015071426 du même déposant.

De manière simpliste, une opération de recalage peut consister à transformer les première et seconde images 3a, 4a pour qu'elles paraissent prises depuis un même point de vue, commun à ces deux images en limitant la distorsion liée à la distance Dx, aux angles entre les axes optiques des caméras, et autre différences entre ces caméras comme leurs focales.

Enfin, selon un mode de réalisation possible du procédé selon l'invention, on peut faire en sorte que le procédé comporte :

- un premier test consistant à analyser la première image 3a qui est en couleur pour, en fonction de règles d'analyse de colorimétrie prédéterminées, définir si l'iris présenté sur cette première image parait représentatif d'un iris réel ou non ;
- un deuxième test consistant à calculer ledit paramètre de similarité à l'aide dudit au moins un critère de ressemblance donné qui comprend un nombre de taches T ;
- un troisième test consistant à calculer ledit paramètre de similarité par calcul d'une valeur de distance statistique entre les première et seconde séries de données D1, D2.

Le premier test peut consister à observer les couleurs de l'iris présenté sur la première image et, en fonction de règles d'analyse de colorimétrie prédéterminées, déterminer s'il s'agit d'une image d'iris apparemment réel ou non. Si de ce premier test, on conclut que la première image est celle d'un iris apparemment réel, alors on considère que ce premier test est réussi. Si au contraire les couleurs observées sur cette première image ne correspondent pas à des couleurs d'un vrai iris, alors on conclut que le test a échoué et que l'on a affaire à un faux / une reproduction R d'iris.

Si l'un au moins de ces tests a échoué alors on génère le signal S représentatif d'une suspicion de fraude.

L'ordre de réalisation des tests et préférentiellement premier test suivi du deuxième test, suivi du troisième test. Le signal S étant généré dès que l'un de ces tests a échoué. Ceci permet de limiter le volume de calculs nécessaires pour générer le signal S tout en allant du test le plus simple à réaliser vers le plus compliqué.

Alternativement, ces tests peuvent être réalisés en parallèle, le signal S étant toujours généré dès que l'un au moins de ces tests a échoué. Il est également possible que ces tests soient combinés selon une combinaison probabiliste à partir de laquelle on décide si, à ce stade, le signal S doit être généré.

De manière préférentiel, comme présenté ci-avant, on fait en sorte de calculer le paramètre de similarité entre les images en utilisant un ou plusieurs facteurs de correction F1, F2 de la distance statistique entre ces images.

Dans certains cas, le signal S représentatif de la suspicion de détection de tentative de fraude de fraude peut signaler une tentative de fraude alors qu'en fait il n'y a pas eu de tentative de fraude avérée. Dans ce cas, le signal devrait être considéré comme erroné. A contrario, ce signal S peut signaler une réelle tentative de fraude.

Pour faciliter l'usage en confiance du signal S, il est proposé selon l'invention de générer un indicateur de confiance représentatif d'une probabilité que le signal S représentatif d'une suspicion de détection de tentative de fraude soit généré pour une tentative de fraude avérée.

Idéalement, cet indicateur de confiance est calculé en fonction d'au moins une spécificité de la première image 3a et d'au moins une spécificité de la seconde image 4a.

Ainsi, lorsque le signal S est généré, il est assorti d'un indicateur de confiance correspondant et l'on peut décider de l'engagement d'actions spécifiques en fonction d'une part de la présence su signal S et d'autre part de la valeur prise par l'indicateur de confiance. Par exemple, lorsque le signal S est généré alors que l'une au moins des première et seconde images est de très mauvaise qualité, et présente par exemple une très faible entropie, alors l'indicateur de confiance calculé prendra une valeur représentative d'une faible probabilité que le signal S corresponde à une réelle tentative de fraude. A contrario, lorsque le signal S est généré alors que la première image présente une forte entropie et la seconde image présente aussi une forte entropie, alors l'indicateur de confiance prendra une valeur représentative d'une forte probabilité que le signal S corresponde à une réelle tentative de fraude. Dans ce mode, la spécificité de la première image utilisée pour calculer l'indicateur de confiance est l'entropie de la première image et la spécificité de la seconde image utilisée pour calculer l'indicateur de confiance est l'entropie de la seconde image. Ainsi, l'indicateur de confiance dans le signal S dépend de spécificités de ces première et seconde images 3a, 4a.

L'invention n'est pas limitée à ce qui vient d'être décrit et elle comprend d'autres particularités comme celles présentées ci-après.

Le signal représentatif d'une suspicion de détection de tentative de fraude peut indiquer qu'il n'y a pas de suspicion de tentative de fraude, ou au contraire qu'il y a eu détection de tentative de fraude. Pour limiter le risque de leurrer le système de reconnaissance d'iris par présentation de deux objets distincts devant les premiers et seconds moyens de capture afin de faire croire à une prise de vue d'un seule objet, on fait en sorte que les premiers et seconds moyens de capture soient mécaniquement liés entre eux via une structure mécanique rigide.

Préférentiellement, on fait en sorte que les première et seconde images 3a, 4a soient générées simultanément pour limiter le risque de ne pas détecter une tentative de fraude. A cette fin, on fait préférentiellement en sorte que les première et seconde images 3a, 4a soient générées à moins d'une seconde d'intervalle, préférentiellement à moins d'un cinquantième de seconde l'une de l'autre, préférentiellement à moins d'un centième de seconde d'intervalle l'une de l'autre. Si l'on utilise un ou plusieurs dispositifs d'acquisition vidéo comme premier et second moyens de capture, avec une capacité d'acquisition de 25 images par secondes, alors on fait en sorte que les première et seconde images soient générées avec moins d'1/50ième de seconde d'écart entre ces deux images. Ceci limite fortement la possibilité que les images générées par les caméras dans cet intervalle soient de deux objets différents.

Ceci réduit le risque d'avoir une fraude par présentation successives de deux reproductions distinctes d'un même iris présentant respectivement les images attendues en spectre visible et proche infrarouge.

## Revendications

**1.** Procédé de détection de tentative de fraude envers un système de reconnaissance (1) d'iris d'oeil humain (2), comprenant :

- la génération d'une première image (3a) d'un iris d'oeil humain observé à l'aide de premiers moyens de capture d'image (3) sensibles dans un spectre de lumière visible et sur un intervalle de fréquences couvrant au moins 50% du spectre de lumière visible, cette première image étant une image couleur large spectre ;
- la génération d'une seconde image (4a) dudit iris (2) observé à l'aide de seconds moyens de capture d'image (4) sensibles dans un spectre proche-infrarouge ;

**caractérisé en ce qu'**il comprend :

- la détermination d'au moins une caractéristique de la première image (3a) déterminée en fonction de caractéristiques optiques respectives de points d'une pluralité de points de cette première image (3a) ; et
- la détermination d'au moins une caractéristique de la seconde image (4a) déterminée en fonction d'intensités lumineuses respectives de points d'une pluralité de points de cette seconde image (4a) ; et **en ce que** en fonction de ladite au moins une caractéristique de la première image (3a) ainsi déterminée et de ladite au moins une caractéristique de la seconde image (4a) ainsi déterminée, on génère un signal (S) représentatif d'une suspicion de détection de tentative de fraude.

**2.** Procédé selon la revendication 1, dans lequel à l'aide de ladite au moins une caractéristique de la première image (3a) ainsi déterminée et de ladite au moins une caractéristique de la seconde image (4a) ainsi déterminée, on calcule un paramètre de similarité représentatif d'un degré de similarité entre les première et seconde images (3a, 4a) selon au moins un critère de ressemblance donné, ce paramètre de similarité variant entre des première et seconde valeurs en passant par une valeur seuil intermédiaire prédéterminée, la première valeur correspondant à un fort degré de ressemblance entre les première et seconde images et la seconde valeur correspondant à un faible degré de ressemblance entre ces première et seconde images, le signal (S) représentatif d'une suspicion de détection de fraude étant émis pour signaler une suspicion de fraude lorsque ledit paramètre de similarité prend une valeur située entre ladite valeur seuil intermédiaire et ladite première valeur qui correspond à un fort degré de ressemblance selon ledit au moins un critère de ressemblance donné.

**3.** Procédé selon la revendication 2, dans lequel pour calculer ledit paramètre de similarité entre les première et seconde images, on utilise un premier facteur correctif (F1) déterminé en fonction de couleurs de points de cette première image (3a).

**4.** Procédé selon la revendication 3, dans lequel ce premier facteur correctif (F1) est déterminé suivant une règle telle que ce premier facteur correctif (F1) prend une première valeur pour un iris majoritairement bleu, une seconde valeur pour un iris majoritairement gris, une troisième valeur pour un iris majoritairement marron et une quatrième valeur pour un iris majoritairement noir, la première valeur étant inférieure à la seconde valeur, la seconde valeur étant inférieure à la troisième valeur et la troisième valeur étant inférieure à la quatrième valeur.

**5.** Procédé selon l'une quelconque des revendications 2 à 4, dans lequel pour calculer ledit paramètre de similarité entre les première et seconde images, on utilise un second facteur correctif (F2) déterminé en fonction d'un niveau d'entropie de la première image (3a) et/ou en fonction d'un niveau d'entropie de la seconde image (4a).

**6.** Procédé selon l'une quelconque des revendications 2 à 5, dans lequel les caractéristiques optiques de points de la pluralité de points de cette première image (3a) comprennent les intensités lumineuses respectives de points de cette pluralité de points.

**7.** Procédé selon l'une quelconque des revendications 2 à 6, dans lequel en cas d'absence d'émission du signal (S) représentatif d'une détection de fraude et tant que ledit paramètre de similarité a une valeur située entre ladite valeur seuil intermédiaire et ladite seconde valeur qui correspond à un faible degré de ressemblance selon ledit au moins un critère de ressemblance donné, un signal d'absence de suspicion de détection de fraude est émis pour signaler une absence de suspicion de fraude.

**8.** Procédé selon l'une quelconque des revendications 2 à 7, dans lequel ledit au moins un critère de ressemblance donné comprend la présence d'un objet visible dans une région donnée de la première image et dans une région donnée correspondante de la seconde image, le paramètre de similarité ayant une valeur calculée située entre ladite valeur seuil intermédiaire et ladite première valeur qui correspond à un fort degré de ressemblance en cas de présence dudit objet.

**9.** Procédé selon l'une quelconque des revendications 2 à 8, dans lequel ledit paramètre de similarité est déterminé à l'aide d'une valeur de distance statistique entre :

- une première série de données (D1) obtenue par mesure desdites caractéristiques optiques respectives de points de cette première image (3a) ; et
- une seconde série de données (D2) obtenue par mesure desdites intensités lumineuses respectives de points de la seconde image (4a).

**10.** Procédé selon la revendication 9, dans lequel :

- la première série de données (D1) est obtenue par calcul à l'aide desdites caractéristiques mesurées de points de la première image (3a), cette première série de données (D1) constituant un descripteur d'une texture apparente dans cette première image ;- la seconde série de données (D2) étant obtenue par calcul, à l'aide desdites caractéristiques mesurées de points de la seconde image (4a), cette seconde série de données (D2) constituant un descripteur d'une texture apparente dans cette seconde image..

11. Procédé selon l'une quelconque des revendications 2 à 10, comportant en outre :

- une étape de localisation d'une première zone d'intérêt (Zi) dans la première image (3a), les points de ladite pluralité de points de la première image (3a) étant exclusivement contenus dans cette première zone d'intérêt ; et
- une étape de localisation d'une seconde zone d'intérêt (Zi) dans la seconde image (4a), les points de ladite pluralité de points de la seconde image (4a) étant exclusivement contenus dans cette seconde zone d'intérêt (Zi), ces première et seconde zones d'intérêt (Zi) correspondant à une partie inférieure de l'iris (2) observé.

12. Procédé selon l'une quelconque des revendications précédentes, dans lequel les premiers moyens de capture d'image (3) comportent des cellules d'un premier type sensibles uniquement dans le spectre de lumière visible et les seconds moyens de capture comportent des cellules d'un second type sensibles uniquement dans le spectre proche infrarouge, ces cellules des premier et second types appartenant à un même capteur électronique d'images.

13. Procédé selon l'une quelconque des revendications 1 à 11, dans lequel les premiers moyens de capture d'image (3) comportent des cellules d'un premier type sensibles uniquement dans le spectre de lumière visible et les seconds moyens de capture (4) comportent des cellules d'un second type sensibles uniquement dans le spectre infrarouge, les cellules du premier type appartenant à un même premier capteur électronique d'images et les cellules du second type appartenant à un même second capteur électronique d'images, ces capteurs des premier et second types étant espacés, le procédé comportant une opération de recalage des première et seconde images.

14. Procédé selon l'une quelconque des revendications 1 à 13, dans lequel en fonction d'au moins une spécificité de la première image (3a) et d'au moins une spécificité de la seconde image (4a), on calcule un indicateur de confiance de la détection de tentative de fraude, cet indicateur de confiance étant représentatif d'une probabilité que le signal (S) représentatif d'une suspicion de détection de tentative de fraude soit généré pour une tentative de fraude avérée.

15. Système de reconnaissance (1) d'iris (2) d'oeil humain comportant au moins :

- des premiers moyens de capture d'image (3) sensibles dans un spectre de lumière visible et sur un intervalle de fréquences couvrant au moins 50% du spectre de lumière visible ;
- des seconds moyens de capture d'image (4) sensibles dans un spectre proche infrarouge ;
- un dispositif de calcul (5) relié auxdits premier et second moyens de capture d'image ;
- des premiers moyens de mémorisation (6) pour mémoriser des caractéristiques biométriques préenregistrées d'au moins un iris d'un individu connu, ces premiers moyens de mémorisation étant reliée au dispositif de calcul (5) ;
- des seconds moyens de mémorisation (7) pour y mémoriser au moins une première image (3a) d'un iris d'oeil humain observé à l'aide de premiers moyens de capture d'image (3) et au moins une seconde image (4a) dudit iris observé à l'aide de seconds moyens de capture d'image 4 ;

le dispositif de calcul (5) étant agencé pour exécuter le procédé de détection de fraude selon l'une quelconque des revendications précédentes.

**Fig. 1**

Fig. 2a

Fig. 2b

```
┌─────────────────────────────────┐              ┌─────────────────────────────────┐
3a │  Image dans le spectre visible  │              │  Image dans le spectre proche   │ 4a
   └─────────────────────────────────┘              │       de l'infra-rouge          │
                                                    └─────────────────────────────────┘
```

Segmentation de l'iris

Localisation des zones d'intérêt (moitié inférieure basse de l'iris annulaire) +
estimation éventuelle par F1 et F2 des caractéristiques des première et secondes images et projection polaire

Traitement des motifs binaires locaux des zones d'intérêt

Histogrammes des caractéristiques des motifs binaires locaux

Calcul de distance chi-2 entre les histogrammes

Calcul du paramètre de similarité Param.
Param = f(distance chi-2; F1; F2)

Oui ← Param < Seuil? → Non

L'iris est "VRAI"

Emission du signal S "FAUX"
représentatif d'une détection de fraude

**Fig. 3**

B3 V P B4 2

D

8 B1 B2 Zi 3a

Zi2

Zi3

D1

Localisation des zones d'intérêt (Zi)
(moitié inférieure basse de l'iris annulaire)

Projection polaire

Traitement des motifs binaires locaux des zones d'intérêt

Histogrammes des caractéristiques
des motifs binaires locaux

**Param = f(Distance chi-2;F1, F2) = 10.5**

V 2

4a Zi

Zi2

Zi3

D2

**Fig. 4**

B3 R P B4 2

D

Localisation des zones d'intérêt (Zi)
(moitié inférieure basse de l'iris annulaire)

R 2

3a

8 B1 B2 Zi

4a

Zi

Zi2

Projection polaire

Zi2

Zi3

Traitement des motifs binaires locaux des zones d'intérêt

Zi3

Histogrammes des caractéristiques
des motifs binaires locaux

**Param = f(Distance chi-2; F1; F2) = 20.4**

D1

**Fig. 5**

D2

EP 3 264 331 A1

**Europäisches Patentamt**
**European Patent Office**
**Office européen des brevets**

# RAPPORT DE RECHERCHE EUROPEENNE

Numéro de la demande

EP 17 17 8861

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2013/223681 A1 (LEE KI DEOK [KR] ET AL) 29 août 2013 (2013-08-29) | 1,2,6,7, 13,15 | INV. G06K9/00 |
| Y | * alinéa [0037] - alinéa [0038]; revendication 1 * ----- | 3-5,12 | |
| Y | FR 2 864 290 A1 (SAGEM [FR]) 24 juin 2005 (2005-06-24) * page 5, ligne 19 - ligne 26 * ----- | 3,4 | |
| Y | JONGHYUN PARK ET AL: "Iris Recognition Against Counterfeit Attack Using Gradient Based Fusion of Multi-spectral Images", 1 janvier 2005 (2005-01-01), ADVANCES IN BIOMETRIC PERSON AUTHENTICATION LECTURE NOTES IN COMPUTER SCIENCE;;LNCS, SPRINGER, BERLIN, DE, PAGE(S) 150 - 156, XP019022254, ISBN: 978-3-540-29431-3 * page 152, ligne 32 - ligne 34 * ----- | 5 | |
| Y | WO 2015/127313 A1 (SAMSUNG ELECTRONICS CO LTD [KR]; SMITS GERARD DIRK [US]) 27 août 2015 (2015-08-27) * page 15, ligne 17 - ligne 19 * ----- | 12 | DOMAINES TECHNIQUES RECHERCHES (IPC) G06K |

Le présent rapport a été établi pour toutes les revendications

| Lieu de la recherche | Date d'achèvement de la recherche | Examinateur |
|---|---|---|
| La Haye | 18 août 2017 | Chateau, Jean-Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**EP 3 264 331 A1**

EP 17 17 8861

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-08-2017

| Document brevet cité au rapport de recherche | | Date de publication | Membre(s) de la famille de brevet(s) | | Date de publication |
|---|---|---|---|---|---|
| US 2013223681 | A1 | 29-08-2013 | CN | 103294993 A | 11-09-2013 |
| | | | KR | 101286454 B1 | 16-07-2013 |
| | | | US | 2013223681 A1 | 29-08-2013 |
| FR 2864290 | A1 | 24-06-2005 | AT | 461496 T | 15-04-2010 |
| | | | CN | 1898679 A | 17-01-2007 |
| | | | EP | 1695260 A1 | 30-08-2006 |
| | | | FR | 2864290 A1 | 24-06-2005 |
| | | | JP | 4555306 B2 | 29-09-2010 |
| | | | JP | 2007515010 A | 07-06-2007 |
| | | | KR | 20060105783 A | 11-10-2006 |
| | | | RU | 2331107 C2 | 10-08-2008 |
| | | | US | 2007110284 A1 | 17-05-2007 |
| | | | WO | 2005062235 A1 | 07-07-2005 |
| WO 2015127313 | A1 | 27-08-2015 | CN | 105874472 A | 17-08-2016 |
| | | | KR | 20160145536 A | 20-12-2016 |
| | | | US | 2015304535 A1 | 22-10-2015 |
| | | | WO | 2015127313 A1 | 27-08-2015 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2864290 A1
- FR 2864290

- US 5291560 A
- WO 2015071426 A

**Littérature non-brevet citée dans la description**

- **J. MATAS ; O. CHUM ; M. URBAN ; T. PAJDLA.** Robust wide baseline stereo from maximally stable extremal regions. *Proc. of British Machine Vision Conference,* 2002, 384-396

- **LOWE D. G.** Object recognition from local scale invariant features. *Proceedings of the International Conference on Computer Vision,* 1999, vol. 2, 1150-1157